# EUROPÄISCHE PATENTSCHRIFT

(11) **EP 3 706 550 B1**
(45) Veröffentlichungstag und Bekanntmachung des Hinweises auf die Patenterteilung: **28.06.2023**
(21) Anmeldenummer: 18800154.9
(22) Anmeldetag: 09.11.2018
(51) Int. Cl.: A01G 13/02

(54) **SCHUTZHÜLSE FÜR PFLANZENSETZLINGE**
PROTECTIVE SLEEVE FOR PLANT SEEDLINGS
MANCHON DE PROTECTION POUR JEUNES PLANTS

(30) Priorität: 09.11.2017 DE 102017126316
(43) Veröffentlichungstag der Anmeldung: 16.09.2020
(73) Patentinhaber: Roser, Martin, 54340 Ensch (DE)
(72) Erfinder: Roser, Martin, 54340 Ensch (DE)
(74) Vertreter: Office Freylinger
(86) Internationale Anmeldenummer: PCT/EP2018/080706
(87) Internationale Veröffentlichungsnummer: WO 2019/092160

(56) Entgegenhaltungen:
- WO-A1-90/01256
- AU-B2- 637 493
- CH-A- 442 846
- GB-A- 2 258 797
- GB-A- 2 509 048
- US-A1- 2010 201 026

## Beschreibung

### Technisches Gebiet

Die vorliegende Erfindung betrifft allgemein den Schutz von Pflanzensetzlingen in der Land- und Forstwirtschaft.

### Stand der Technik

Pflanzensetzlinge werden aktuell in der Regel mit Kunststoff enthaltenden Hülsen vor Insekten, Pilz und anderen Gefahren geschützt. Ebenfalls soll dadurch ein besseres Klima in der Hülse erzeugt werden, so dass die Pflanzen besser wachsen können. Am Markt erhältliche Lösungen sind lediglich Schutzhülsen für Pflanzensetzlinge mit Kunststoffanteilen.

Der Kunststoffanteil stellt jedoch eine Belastung für die Umwelt dar, da er - manchmal durch "Wind und Wetter" bedingt - nicht dauerhaft hält und sich schon vor dem gewollten Abbau in der Gegend verflüchtigt. Nachteilig bei diesen bekannten Schutzhülsen ist außerdem, dass sie nach einiger Zeit mühsam wieder eingesammelt werden müssen.

AU 637 493 B2 beschreibt eine Schutzhülse für Pflanzensetzlinge, wobei die Schutzhülse eine Wand aufweist die in Form eines Hohlzylinders ausgestaltet oder ausgestaltbar ist und wobei die Wand aus einem Material besteht, das als Grundmaterial unvergärte Biomasse beinhaltet. WO 90/01256 A1 beschreibt eine Schutzscheibe für Setzlinge, die eine Kombination aus vergärter und unvergärter Biomasse enthalten kann. US 2010/201026 A1 beschreibt Verbundkomponenten aus anaerob vergärten Fasermaterialien denen auch nicht vergärte Materialen zugesetzt werden können. GB 2 258 797 A beschreibt einen Schösslingsschutz der eine pyramidenstumpfförmige Struktur umfasst, die aus einem biologisch abbaubaren Material, wie z. B. recyceltem Papierzellstoff, gebildet ist. GB 2 509 048 A beschreibt Pflanzenschutzvorrichtungen die über gepflanzten Samen oder alternativ einem bereits gekeimten Sämling positioniert werden können und bevorzugt aus einem leichten, flexiblen Material wie synthetischem Kunststoff, z.B. recycelbarem Kunststoffmaterial, gebildet werden. Es wird außerdem erwähnt, dass in einigen Ausführungsformen biologisch abbaubarer organischer Kunststoff verwendet werden kann. CH 442 846 A offenbart einen Pflanztopf bestehend aus vergärtem und unvergärtem Klärschlamm.

### Aufgabe der Erfindung

Eine Aufgabe der vorliegenden Erfindung ist es, Schutzhülsen für Pflanzensetzlinge aus biologisch abbaubarem Material zu entwickeln, wobei das verwendete Material kostengünstig und für die Umwelt unbedenklich sein sollte, aber trotzdem den Anforderungen an Haltbarkeit und Festigkeit entsprechen muss.

### Allgemeine Beschreibung der Erfindung

Diese Aufgabe wird erfindungsgemäß gelöst durch eine Schutzhülse für Pflanzensetzlinge, wobei die Schutzhülse eine Wand aufweist die in Form eines Hohlzylinders, eines drei- oder mehrseitigen Hohlprismas oder eines Kegelstumpfs ausgestaltet oder ausgestaltbar ist und wobei die Wand aus einem Material besteht das als Grundmaterial vergärte Biomasse enthält, wobei dem Grundmaterial zusätzlich unvergärte Biomasse zugesetzt wurde und die Wand zusätzlich eine innere und/oder eine äußere Stützschicht aufweist, wobei die Stützschicht aus einem biologisch abbaubaren Geflecht, Gewirk oder Gewebe aus langfaserigem Material, vorzugsweise aus Garn, Hanf, Stroh oder Mischungen davon besteht.

Weiterhin betrifft die Erfindung ein Verfahren zur Herstellung einer Schutzhülse für Pflanzensetzlinge, wobei vergärte Biomasse als Bestandteil eines Grundmaterials in flächiger Form oder in Form eines Hohlzylinders, eines drei- oder mehrseitigen Hohlprismas oder eines Kegelstumpfs ausgestaltet wird, wobei dem Grundmaterial vor der Ausgestaltung zusätzlich unvergärte Biomasse zugesetzt wird und wobei eine innere und/oder eine äußere Stützschicht auf die Wand aufgebracht wird, wobei die Stützschicht aus einem biologisch abbaubaren Geflecht, Gewirk oder Gewebe aus langfaserigem Material, vorzugsweise aus Garn, Hanf, Stroh oder Mischungen davon besteht.

Das Grundmaterial der erfindungsgemäßen Schutzhülsen beinhaltet vergärte Biomasse. Der Begriff Biomasse im Sinne der Erfindung ist als energietechnische Biomasse zu verstehen und umfasst ausschließlich tierische und pflanzliche Erzeugnisse, die zur Gewinnung von Heizenergie, von elektrischer Energie und als Kraftstoffe dienen können. Im Vergleich mit den ökologischen Biomasse-Begriffen, ist der energietechnische Biomasse-Begriff somit viel enger gefasst. Erstens bezieht er sich bevorzugt ausschließlich auf tierische und pflanzliche, meistens jedoch nicht auf ausschließlich mikrobielle Stoffe, bzw. zweitens umfasst er innerhalb der tierischen und pflanzlichen Stoffe vorzugsweise nur solche Substanzen, die durch Mikroorganismen oder Enzyme abgebaut und energietechnisch verwertet werden können.

Nach der aktuellen Definition Gärung (Gemeinsame Normdatei GND: 4155803-0), handelt es sich um einen energieliefernden anaeroben mikrobiellen Abbau organischer Stoffe ohne die Einbeziehung von externen Elektronenakzeptoren, wie z.B. Sauerstoff. Der Abbau von Kohlenhydraten mit organischen Wasserstoffakzeptoren, steht hier im Vordergrund. Gleichbedeutend wäre anaerobe Fermentation, da die Gärung ein Teilbereich der Fermentation ist. Zum Stand der Technik gehören dabei die Biogasanlagen, die in einem anaeroben Milieu in einem Fermenter, organische Substanzen vergären, wobei nebst der Methanproduktion ein nährstoffhaltiger Gärrest anfällt. Dieser wird nebst der Eigenverwertung als Dünger auch als Wirtschaftsdünger eingesetzt.

Zur Verstoffwechselung in einer Vergärungsanlage, z.B. einer Biogasanlage, werden generell jene Stoffe genutzt, die energetisch sinnvoll sind und bilden somit einen bevorzugten Rahmen für "vergärte Biomasse", im Kontext mit der Herstellung einer erfindungsgemäßen Pflanzenschutzhülse. Vergärte Biomasse im Sinne der Erfindung beinhaltet folglich tierische und pflanzliche Erzeugnisse die einer Gärung oder Vergärung, also einem anaeroben mikrobiellen Abbau unterworfen wurden, beispielsweise in einer Biogasanlage. Als Beispiele bevorzugter Ausgangsprodukte der Vergärung können Maissilage, Grassilage, Wiesen- oder Ackergras, Roggen-Ganzpflanzensilage, Futterrübe, biologische Abfälle, Hühnermist, Zuckerrüben, Schweinemist und -gülle, Rindermist und -gülle, Getreideschlempe, Schweinegülle, Rindergülle, Trester, Fallobst aber auch Biomüll, Holz, Hausmüll, Grünschnitt oder Abfallprodukte aus der Lebensmittelproduktion, usw. genannt werden.

Bevorzugt beinhaltet die vergärte Biomasse vergärten Tierkot und/oder vergärte tierische Gülle. Gülle besteht hauptsächlich aus Urin und Kot landwirtschaftlicher Nutztiere. Je nach Beigabe von Einstreu und Wasser spricht man von Dick- oder Dünngülle, Schwemmmist oder Flüssigmist. Vergärter Tierkot oder vergärte tierische Gülle im Sinne der Erfindung besteht demnach aus den Gärresten einer Vergärungsanlage, wie z.B. Biogasanlagen und kann ggf. auch andere vergärte organische Abfälle beinhalten.

Weiterhin wird dem Grundmaterial zusätzlich unvergärte Biomasse, vorzugsweise unvergärter Kot oder unvergärte tierische Gülle, bevorzugt Hühnertrockenkot oder unvergärtes Fasermaterial (wie weiter unten beschrieben) zugesetzt.

Sowohl die vergärte oder unvergärte Biomasse, als auch der vergärte wie unvergärte Tierkot oder die vergärte oder unvergärte Gülle können in feuchter oder trockner Form verwendet werden. Allgemein wird das Rohmaterial zur Herstellung einer ökologischen Pflanzenschutzhülse mehreren Fertigungsschritten unterworfen werden, wie z.B. thermische Trocknung, Häckseln, Mahlen, Separieren, usw. Wie unten weiter ausgeführt, ist der Anteil an vergärter Biomasse je nach Anwendung unterschiedlich. In den meisten Fällen liegt dieser Anteil jedoch mindestens bei 5 Gew.-% der Trockenmasse, generell überwiegend zwischen 10 und 95 Gew.-%, bevorzugt zwischen 20 und 40 Gew.-%, bezogen auf das Grundmaterial.

Die Schutzhülsen können ein- oder mehrstückig ausgeführt werden. Im Fall einer mehrstückigen Ausgestaltung, sind die Einzelteile vorzugsweise so gestaltet, dass sie sich einfach zusammenfügen lassen, z.B. durch geeignete formschlüssige oder kraftschlüssige Verbindungen, wie beispielsweise Steckverbindungen. Wird die Schutzhülse in flächiger Form hergestellt, wird sie zu einem späteren Zeitpunkt, z.B. vor Ort, aufgerollt oder gefaltet um einen Hohlzylinder, ein drei- oder mehrseitiges Hohlprisma oder einen Kegelstumpf zu formen. Zweckmäßigerweise weist in dem Fall zumindest einer der zusammenzuführenden Ränder bevorzugt Befestigungsmittel auf, um die Ränder entweder auf Kante oder überlappend miteinander zu verbinden. Um Transport- und Lagerkosten zu verringern, kann es vorteilhaft sein die Schutzhülsen in flächiger Form herzustellen und dann erst vor Ort zusammenzurollen oder -falten. Ebenfalls interessant sind kegelstumpfförmige Ausführungen wobei sich die so gestalteten Schutzhülsen ineinanderstecken lassen und so zusätzlich während dem Transport geschützt sind.

Die Wand der Schutzhülsen kann ganzheitlich geschlossen oder teilweise oder ganz mit Schlitzen oder Löchern versehen sein. Alternativ, kann die Wand auch als Gitterkonstrukt ausgeführt werden.

Die erfindungsgemäßen Schutzhülsen können Jungpflanzen, wie z.B. Weinreben, nicht nur bis zur Selbstüberlassung vor Insekten, Pilz und anderen Gefahren schützen, sondern außerdem dem Boden durch ihren langsamen Abbau wertvolle Nährstoffe über längere Zeit zuführen. Dabei dienen die organischen Bestandteile der Ernährung von Bodenorganismen, die ihrerseits Nährstoffe den Jungpflanzen verfügbar machen. Die erfindungsgemäßen Schutzhülsen fördern durch ihre langsame Verwitterung die Wechselwirkungen zwischen Boden und Pflanze sowie die Stoffwechselprozesse im Boden.

Die Lebensdauer der Schutzhülsen, d.h. die Zeit vom Aufstellen im Feld bis zu deren Verwitterung, kann dabei je nach Pflanzenart derart eingestellt werden, dass die Schutzhülsen nach ein paar Wochen bis hin zu zwei oder mehr Jahren völlig abgebaut sind. Die erfindungsgemäßen Schutzhülsen sind 100 % ökologisch und ein Einsammeln der Schutzhülsen ist nicht mehr notwendig. Außerdem erlaubt die Verwendung der erfindungsgemäßen Schutzhülsen eine ästhetische Bewirtschaftung von Feldern und Weinbergen.

In einer bevorzugten Ausgestaltung können dem Grundmaterial zusätzlich Fasern, besonders bevorzugt (unvergärte) pflanzliche Fasern, wie beispielsweise Gras, Stroh, Holzspäne oder Mischungen davon zugesetzt werden. Einerseits wird durch das Zusetzen dieser Fasern die mechanische Stabilität erhöht. Andererseits verlangsamen die eingebrachten Fasern die Verwitterung der Schutzhülsen und verlängern somit deren Lebensdauer.

Je nach Pflanzenart und Bodenbeschaffenheit können dem Grundmaterial zusätzlich mineralische Dünger, wie z.B. Kalk, zugesetzt werden um so eine gezielte Düngung der Pflanzen zu erreichen und gegebenenfalls sogar eine Aufwertung des Bodens zu bewirken. Es kann auch von Vorteil oder zweckmäßig sein dem Grundmaterial ökologische Pflanzenschutzmittel zuzusetzen, wie z.B. Pflanzenschutzmittel die für den ökologischen Landbau nach der Verordnung (EG) Nr. 834/2007 zugelassenen sind.

Die mechanische Stabilität oder die Lebensdauer der Schutzhülsen können auch dadurch erhöht werden, dass das Material aus dem die Wand besteht zusätzlich zum Grundmaterial ein biologisch abbaubares Bindemittel enthält. Solche Bindemittel können leicht abbaubar sein, z.B. natürliche Polymere wie Stärke, Pektin oder langsam abbaubar wie z.B. Zellstoff, natürliche Harze oder Wachse. Möglich ist auch die Verwendung von Kaseinleim (Quark und Kalk), einer aus natürlichen Stoffen bestehenden Pulpe oder Dextrinkleber. In einer bevorzugten Ausgestaltung der Erfindung enthalten die Schutzhülsen Thermoplaste aus nachwachsenden Rohstoffen, wie Mischungen aus Lignin mit Flachs-, Hanf- oder anderen Fasern. Sehr gut geeignet sind kunststoffähnliche aber natürliche Materiale wie z.B. Arboform (http://arboform.de/deutsch) oder Arboblend von der Firma TECNARO GmbH oder z.B. ein Polymer aus Kasein (Fa. Qnature UG), welche als Granulat erhältlich sind. Die Zugabe solcher thermoplastischen aber abbaubaren Bindemittel ermöglicht oder vereinfacht die Herstellung der Schutzhülsen durch Spritzguss oder Extrusion.

Die Wand der erfindungsgemäßen Schutzhülsen für Pflanzensetzlinge weist zusätzlich eine innere Stützschicht und/oder eine äußere Stützschicht auf. Bevorzugt besteht eine solche Stützschicht aus einem biologisch abbaubaren Geflecht, Gewirk oder Gewebe aus langfaserigem Material, besonders bevorzugt aus Garn, Hanf, Stroh oder Mischungen davon.

Grundsätzlich richten sich die Abmessungen der Schutzhülsen nach denen der zu schützenden Pflanzen. Die Wandstärke der Schutzhülsen für Pflanzensetzlinge wird jedoch prinzipiell je nach Einsatz und gewünschter Lebensdauer eingestellt. Üblicherweise beträgt die Wandstärke zwischen 1 und 15 mm, vorzugsweise zwischen 1,5 und 7 mm.

Vor, während oder nach der Herstellung der Schutzhülsen wird das Grundmaterial, z.B. sofern es tierischen Kot oder Gülle enthält, üblicherweise hygienisiert, d.h. von Keimen befreit. Dies kann mittels jedes bekannten Verfahrens durchgeführt werden, z.B. durch Erhitzen, mittels Mikrowellenbehandlung, usw. Das Grundmaterial kann durch jede geeignete Maßnahme geformt (d.h. ausgestaltet) werden. Geeignete Maßnahmen beinhalten u.a. Pressen, Spritzgießen, Extrusion, usw.

### Kurze Beschreibung der Figuren

Weitere Einzelheiten und Vorteile der Erfindung können der nachfolgenden ausführlichen Beschreibung möglicher Ausführungsformen der Erfindung anhand der beiliegenden Figuren entnommen werden. Diese zeigen:

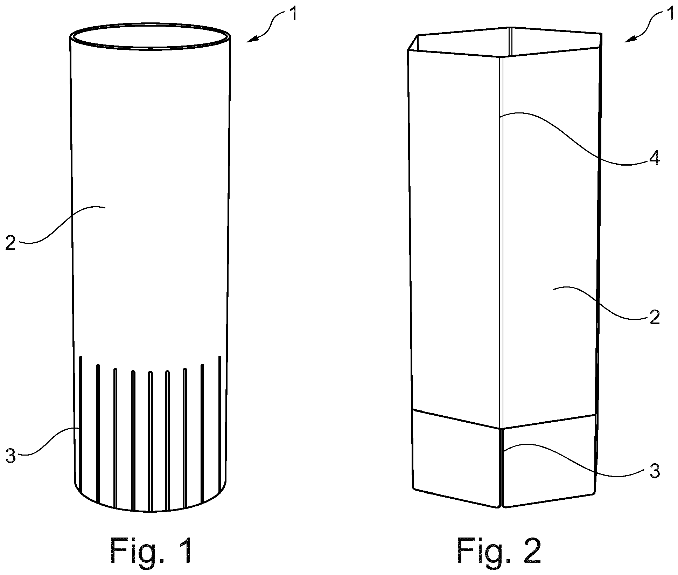

Fig. 1-4: schematische Darstellungen verschiedener Varianten erfindungsgemäßer Schutzhülsen für Pflanzensetzlinge.

### Beschreibung mehrerer Ausgestaltungen der Erfindung

Die erfindungsgemäßen Schutzhülsen können ganzheitlich als Hohlzylinder, in Form eines Quaders, oder generell eines mehrseitigen Prismas, oder als Kegelstumpf als festes, wie auch als flexibles und aufroll- oder faltbares Produkt ausgestaltet werden. Weiterhin besteht die Möglichkeit, dass die Schutzhülse aus mehreren gebündelten Stäben, in längsseits wabenförmig mit ökologischem Material gefüllten Röhren oder als Halbschale bzw. gewebt gefertigt wird. Ein implementierter oder außen angebrachter Inliner aus Stroh oder anderweitigen Materialien, kann dabei zur Stabilisierung des Konstruktes in Form eines Geflechtes eingearbeitet werden. Ebenfalls kann es für manche Anwendungsbereiche eventuell von Vorteil oder von Nöten sein, den Innenbereich oder Außenbereich mit einer allumschließenden Hülle aus Holz oder ähnlichem Werkstoff zu versehen. Weiterhin gilt noch zu ergänzen, dass eine gänzlich quer ausgestaltete Wabenhülse aus biologisch abbaubarem oder nicht verwitterungsfähigem Material, bei der die Waben quer zur Länge der Schutzhülse ausgebildet sind, eine geeignete Konstruktion zur Einarbeitung von Gärresten bzw. humusbildenden Substanzen darstellen würde. Naheliegend sind selbstverständlich andere in der Geometrie bekannte Formen als Strukturgebung, wie z.B. eine runde Anordnung.

Falls nötig oder erwünscht, kann ein geeignetes Bindemittel, z.B. ein organischer Kleber oder Haftverbinder dabei, unter Berücksichtigung einer zeitlich begrenzten Zersetzung unter Einwirkung von Luft und deren Bestandteilen, der Einwirkung von Sonnenlicht und/oder Wasser in Form von Niederschlag, für den nötigen Zusammenhalt der Schutzhülsenkonstruktion sorgen, sowie den gewollten Zerfall beeinflussen.

Eine unter Druck gepresste Schutzhülse aus Tierkot oder Gärresten, ggf. in Verbindung mit anderen biologischen Materialien, kann je nach Anforderung dabei u.U. schon einen Großteil der Stabilität und Haltbarkeit mit sich bringen.

Unterschiedliche Bereiche der Schutzhülse, können so ausgestaltet werden, dass sie unterschiedlichen Anforderungen angepasst werden können. So kann z.B. der untere Bereich durch die hydrophile Eigenschaft mit Insektenschutz beaufschlagt, der Mittelbereich mit Dung bzw. verbissschützenden Materialien und der obere Bereich mit rein humusbildenden Substraten die auch hydrophobe Eigenschaften aufweisen können, aufgebaut sein.

Die Schutzhülse kann ganzheitlich geschlossen, als reines Gitterkonstrukt ausgeführt bzw. mit Schlitzen oder Löchern versehen oder aber als Mischkonstrukt ausgebildet sein.

Das Einarbeiten von mineralischem Dünger bzw. zur Verbesserung der Pflanzenentwicklung und Bodenaufwertung anderweitig der in der Land-, Forst- und Agrarwirtschaft bekannten Hilfsstoffe ist ebenfalls möglich.

Die Vorteile der erfindungsgemäßen Schutzhülsen sind z.B.:
- Verarbeitung von biologischem und daher nachhaltigem Material
- Vielseitigkeit in der Verwendung der Schutzhülse
- Anpassung auf geographische und einhergehend ökologischen Anforderungen
- Umweltentlastung durch Fernbleiben von Kunststoff in der Land- und Forstwirtschaft
- Aufwertung des Bodens
- Reduzierung von Schäden am Pflanzgut durch Vorhandensein von ökologischen Pflanzenschutzmitteln
- Einsparung von Mehraufwand durch Einsammeln von Kunststoffhülsen
- Verbessertes Pflanzenwachstum
- Gezielte Düngung, so dass eine Flächendüngung nicht notwendig ist
- Einsparung von Dünger
- Feuchtigkeitsspeichernde Fähigkeit durch integrierte hydrophile Materialien

Anforderungen an die Schutzhülsen, Haltbarkeit/Abbaubarkeit, Festigkeit, usw.

Ihr Eigengewicht und die Wandstärke werden durch die gewählten Substrate so ausgestaltet, dass sie einfach zu transportieren und zu verarbeiten sind. Die Festigkeit wird dabei so gewählt, dass sie während der Handhabung und auf dem Weg der Einbringung nicht brechen bzw. Ablöseerscheinungen in der Mantelfläche aufweisen. Die optionale in sich gebende Gewebestruktur bzw. die Bindemittel, binden falls nötig die organischen Materialien, so dass diese sich nicht aus dem Verbund lösen.

Erfindungsgemäß erfolgt die Zersetzung der Schutzhülse erst nach der Verwendung auf dem Feld, so dass die Lagerung der Schutzhülse keine Probleme mit sich bringt.

Die Abbaubarkeit unter genannten Einflüssen ist auf die notwendige Schutzdauer der jeweiligen Jungpflanzen ausgelegt. Ablösungen und Auflösungserscheinungen während der Nutzung der Schutzhülse sind erwünscht, dürfen jedoch den Schutz der Pflanze bis zum Ende der kritischen Wachstumsphase nicht beeinträchtigen.

Die Schutzhülsen können je nach Anforderung des Bodens und Wunsch des Kunden hydrophil aber auch hydrophob ausgeführt werden.

Sofern ein stabiles nicht verwitterungsfähiges Konstrukt im Innenbereich gewählt wurde, ist dieses vorzugsweise einfach zu demontieren (z.B. 2-schalig).

Das Grundmaterial der erfindungsgemäßen Schutzhülsen enthält oder besteht aus vergärter Biomasse, wobei diesem Grundmaterial zusätzlich unvergärte Biomasse zugesetzt wurde, und kann somit vergärten Tierkot oder vergärte Gülle sowie alle möglichen Zusammensetzungen an Gärresten einer Biogasanlage enthalten oder daraus bestehen. Außerdem kann gepresstes Schnittgut (z.B. Holz, Gras, Pflanzen) definierter Korngröße ebenfalls in dieses Grundmaterial eingebracht werden. Ebenfalls besteht die Möglichkeit, dem Grundmaterial Späne bzw. Schleifstaub und somit Holz zuzugeben. Auch die Möglichkeit sie in einem Spritzguss- oder Extrusionsverfahren mittels Zugabe von Arboblend oder Arboform (Tecnaro GmbH) herzustellen ist vorgesehen.

Die Stützschicht innen und/oder außen kann aus Garn, Hanf, Gras, Stroh oder ähnlich langfaserigem Material bestehen. Durch eine geeignete Maschinenunterstützung, können die Stützschichten geflochten bzw. gewebt werden.

Die Zusammensetzung der erfindungsgemäßen Schutzhülsen beinhaltet jegliche in der Natur vorkommenden Stoffe, ob zuvor einer Vergärung oder teilbehandelt als Hackgut zugeführt, wie z.B. auch Bananenschalen oder Algen.

Die Schutzhülsen können aus einem biologischen homogenen oder heterogenen Vollmaterial gestanzt bzw. geschnitten werden. Ebenfalls ist das Pressen der Substrate in einer Form eine sehr geeignete Methode zur Herstellung von Schutzhülsen definierter geometrischer Form.

Die erfindungsgemäßen Schutzhülsen für Pflanzensetzlinge können in allen Bereichen der Land- und Forstwirtschaft Anwendung finden, wie z.B. in der Wein-, Acker- und Forstwirtschaft, inkl. Baumschulen. Als einzelne bzw. mehrstückige oder zusammenroll- oder -faltbare Ausgestaltungen können die Schutzhülsen auch als Anbauunterstützung von Bestandspflanzen (z.B. als 2-schalige Ausführung) dienen.

### Beispiele einiger Ausgestaltungen

Die Fig. 1 stellt eine zylindrische Schutzhülse 1 dar, die im unteren Teil der Wand 2 längsseits der Schutzhülse Schlitze 3 aufweist. Die gänzliche Wand 2 besteht dabei aus einer einheitlichen Gärrestmischung.

Die Wand 2 der Schutzhülse 1 in Fig. 2 besitzt als Grundform ein 6-seitiges Prisma, dessen unterer Bereich ebenfalls längsseits Schlitze 3 aufweist. Dieser Form wird sich bevorzugt bedient, sofern für die Herstellung eine flächige Ausgestaltung gewählt wird. Auffällig ist dabei die Knickkante 4, die sich bei der Faltung der Wand 2 der Schutzhülse 1 ergibt.

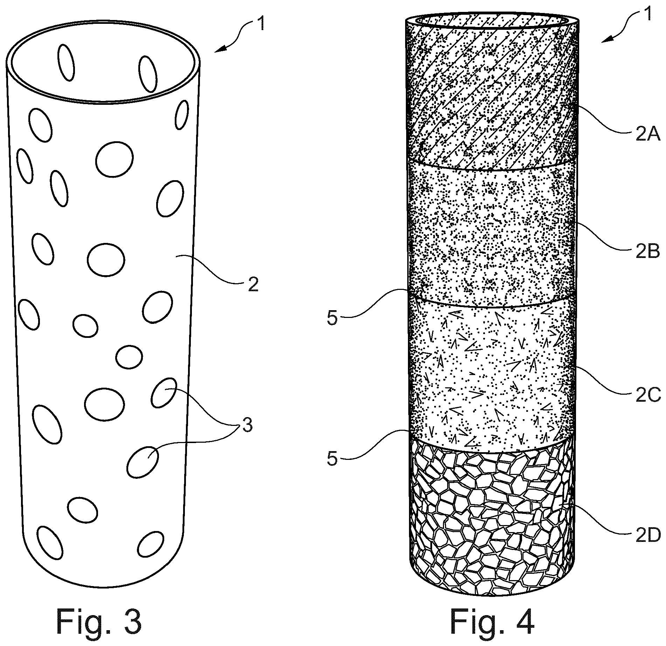

Die Fig. 3, stellt eine Schutzhülse 1 in Zylinderform dar, die mittels einer Gärrestmischung (heterogene, doch homogen wirkend) hergestellt worden ist. Der Randbereich in seiner definierten Stärke der Wand 2, ist klar erkennbar und auf die jeweilige und gewünschte Zersetzungszeit ausgelegt. Auffällig ist die diffuse Anordnung der runden und teils ovalen Löcher 3 der Schutzhülse 1.

Die Fig. 4, stellt eine mehrstückige Schutzhülse 1 dar, wie sie bereits oben beschrieben wurde. Die Zusammensetzung und Auslegung der Hülsensegmente, erfolgt nach dem Bedarf des Bodens, auf dem sie platziert werden soll. Mittels der genannten und geeigneten Verbindungsarten werden die Wandsegmente 2A-2D untereinander an den Ansätzen 5 verbunden. Das Beispiel der Fig. 4 zeigt, dass hier eine Schutzhülse 4-stückig gefertigt wurde, dessen oberer Ring aus vergärter Grassilage besteht (2A), der Ring (2B) aus Kalk gepresst wurde, der Ring (2C) aus einer vergärten Mixtur aus Hühnertrockenkot und Grassilage und der untere Ring (2D) aus einem hydrophilen mit ökologischem Pflanzenschutzmittel beaufschlagten Trester-/Grassilagegärrest besteht.

### Zeichenerklärung:

- 1: Schutzhülse für Pflanzensetzlinge
- 2: Wand
- 3: Öffnungen (Schlitze, runde, ovale oder mehreckige Löcher, usw.)
- 4: Knickkante
- 5: Ansätze mehrstückiger Schutzhülsen

## Patentansprüche

1. Schutzhülse für Pflanzensetzlinge, wobei die Schutzhülse eine Wand aufweist die in Form eines Hohlzylinders, eines drei- oder mehrseitigen Hohlprismas oder eines Kegelstumpfs ausgestaltet oder ausgestaltbar ist, wobei die Wand aus einem Material besteht, das als Grundmaterial vergärte Biomasse beinhaltet, wobei dem Grundmaterial zusätzlich unvergärte Biomasse zugesetzt wurde und dass die Wand zusätzlich eine innere und/oder eine äußere Stützschicht aufweist, wobei die Stützschicht aus einem biologisch abbaubaren Geflecht, Gewirk oder Gewebe aus langfaserigem Material, vorzugsweise aus Garn, Hanf, Stroh oder Mischungen davon besteht.

2. Schutzhülse für Pflanzensetzlinge nach Anspruch 1, wobei die vergärte Biomasse vergärten Kot oder vergärte tierische Gülle beinhaltet, bevorzugt Hühnerkotgärreste aus einer Biogasanlage.

3. Schutzhülse für Pflanzensetzlinge nach Anspruch 1 oder 2, wobei die unvergärte Biomasse ausgewählt ist aus unvergärtem Kot, unvergärter tierischer Gülle, pflanzlichen Fasern oder Mischungen davon, vorzugsweise Hühnertrockenkot, Gras, Stroh, Holzspäne oder Mischungen davon.

4. Schutzhülse für Pflanzensetzlinge nach einem der Ansprüche 1 bis 3, wobei dem Grundmaterial zusätzlich mineralische Dünger, ökologische Pflanzenschutzmittel oder Mischungen davon zugesetzt wurden.

5. Schutzhülse für Pflanzensetzlinge nach einem der Ansprüche 1 bis 4, wobei das Material aus dem die Wand besteht zusätzlich zum Grundmaterial ein biologisch abbaubares Bindemittel enthält, vorzugsweise Stärke, Zellstoff, Pektin, Kaseinleim, Dextrinkleber, natürliche Harze oder Wachse und/oder Thermoplaste aus nachwachsenden Rohstoffen, wie Mischungen aus Lignin mit Flachs-, Hanf- oder anderen Fasern oder Polymere aus Kasein.

6. Schutzhülse für Pflanzensetzlinge nach einem der Ansprüche 1 bis 5, wobei die Wandstärke zwischen 1 und 15 mm, vorzugsweise zwischen 1,5 und 7 mm beträgt.

7. Schutzhülse für Pflanzensetzlinge nach einem der Ansprüche 1 bis 6, wobei das Grundmaterial gepresst, spritzgegossen oder extrudiert ist.

8. Verfahren zur Herstellung einer Schutzhülse für Pflanzensetzlinge, wobei vergärte Biomasse als Bestandteil eines Grundmaterials in flächiger Form oder in Form eines Hohlzylinders, eines drei- oder mehrseitigen Hohlprismas oder eines Kegelstumpfs ausgestaltet wird, wobei dem Grundmaterial vor der Ausgestaltung zusätzlich unvergärte Biomasse zugesetzt wird und wobei eine innere und/oder eine äußere Stützschicht auf die Wand aufgebracht wird, wobei die Stützschicht aus einem biologisch abbaubaren Geflecht, Gewirk oder Gewebe aus langfaserigem Material, vorzugsweise aus Garn, Hanf, Stroh oder Mischungen davon besteht.

9. Verfahren nach Anspruch 8, wobei die unvergärte Biomasse ausgewählt ist aus unvergärtem Kot, unvergärter tierischer Gülle, pflanzlichen Fasern oder Mischungen davon, vorzugsweise Hühnertrockenkot, Gras, Stroh, Holzspäne oder Mischungen davon.

10. Verfahren nach einem der Ansprüche 8 und 9, wobei dem Grundmaterial vor der Ausgestaltung zusätzlich mineralische Dünger, ökologische Pflanzenschutzmittel oder Mischungen davon zugesetzt werden.

11. Verfahren nach einem der Ansprüche 8 bis 10, wobei das Material aus dem die Wand besteht zusätzlich zum Grundmaterial ein biologisch abbaubares Bindemittel enthält, vorzugsweise Stärke, Zellstoff, Pektin, Kaseinleim, Dextrinkleber, natürliche Harze oder Wachse und/oder Thermoplaste aus nachwachsenden Rohstoffen, wie Mischungen aus Lignin mit Flachs-, Hanf- oder anderen Fasern oder Polymere aus Kasein.

12. Verfahren nach einem der Ansprüche 8 bis 11, wobei die Wandstärke zwischen 1 und 15 mm, vorzugsweise zwischen 1,5 und 7 mm beträgt.

13. Verfahren nach einem der Ansprüche 8 bis 12, wobei das Grundmaterial zur Ausgestaltung gepresst, spritzgegossen oder extrudiert wird.

## Claims

1. Protective sleeve for plant seedlings, wherein the protective sleeve includes a wall that is or can be shaped as a hollow cylinder, as a three-sided or more hollow prism or as a truncated cone, wherein the wall is made of a material that contains digested biomass as a base material, wherein undigested biomass is added to the base material, and the wall further includes an inner and/or an outer support layer, wherein the support layer is made of biodegradable mesh, knitted mesh or web of long fibrous material, preferably made of yarn, of hemp, of straw or of mixtures thereof.

2. Protective sleeve for plant seedlings according to claim 1, wherein the digested biomass contains digested excrements or digested animal manure, preferably residues of chicken dung fermentation from a biogas plant.

3. Protective sleeve for plant seedlings according to claim 1 or 2, wherein the undigested biomass is selected from undigested excrements, undigested animal manure, plant fibers or mixtures thereof, preferably dry chicken dung, grass, straw, chipped wood or mixtures thereof.

4. Protective sleeve for plant seedlings according to any of the claims 1 to 3, wherein mineral fertilizer, ecological plant protecting agent or mixtures thereof are additionally added to the base material.

5. Protective sleeve for plant seedlings according to any of the claims 1 to 4, wherein the material of the wall contains a biodegradable binding agent in addition to the base material, preferably starch, cellulose, pectin, casein glue, dextrin glue, natural resins or waxes and/or thermoplastic polymers from renewable raw materials, such as mixtures of lignin with flax, hemp or other fibers or polymers from casein in addition to the base material.

6. Protective sleeve for plant seedlings according to any of the claims 1 to 5, wherein the thickness of the wall is 1 to 15 mm, preferably 1.5 to 7 mm.

7. Protective sleeve for plant seedlings according to any of the claims 1 to 6, wherein the base material is compacted, injection molded or extruded.

8. Process for the manufacture of a protective sleeve for plant seedlings, wherein digested biomass is shaped as a component of a base material as a planar element or as a hollow cylinder, as a three-sided or more hollow prism or as a truncated cone, digested biomass is added to the base material before the shaping, and wherein an inner and/or an outer support layer is applied onto the wall, wherein the support layer is made of biodegradable mesh, knitted mesh or web of long fibrous material, preferably made of yarn, of hemp, of straw or of mixtures thereof.

9. Process according to claim 8, wherein the undigested biomass is selected from indigested excrements, undigested animal manure, plant fibers or mixtures thereof, preferably dry chicken dung, grass, straw, chipped wood or mixtures thereof.

10. Process according to any of the claims 8 and 9, wherein mineral fertilizer, ecological plant protecting agent or mixtures thereof are additionally added to the base material before shaping.

11. Process according to any of the claims 8 to 10, wherein the material of the wall contains a biodegradable binding agent in addition to the base material, preferably starch, cellulose, pectin, casein glue, dextrin glue, natural resins or waxes and/or thermoplastic polymers from renewable raw materials, such as mixtures of lignin with flax, hemp or other fibers or polymers from casein in addition to the base material.

12. Process according to any of the claims 8 to 11, wherein the thickness of the wall is 1 to 15 mm, preferably 1.5 to 7 mm.

13. Process according to any of the claims 8 to 12, wherein the base material is compacted, injection molded or extruded for shaping.

## Revendications

1. Gaine protectrice pour plants, ladite gaine protectrice comportant une paroi qui est réalisée, ou peut être réalisée, sous forme d'un cylindre creux, d'un prisme creux à trois ou à plusieurs faces ou d'un cône tronqué, ladite paroi étant constituée d'un matériau contenant, comme matériau de base, de la biomasse fermentée, le matériau de base étant en outre enrichi en biomasse non-fermentée et la paroi comporte en outre une couche de support intérieure et/ou extérieure, ladite couche de support étant constituée d'un treillis, tricot ou tissu biodégradable qui est réalisé à partir d'un matériau à fibres longues, préférentiellement à partir de fils, de chanvre, de paille ou de leurs mélanges.

2. Gaine protectrice pour plants selon la revendication 1, la biomasse fermentée contenant des matières fécales fermentées ou du lisier animal fermenté, de préférence les résidus de la fermentation de fientes de poules, issus d'une installation de production de biogaz.

3. Gaine protectrice pour plants selon les revendications 1 ou 2, la biomasse non-fermentée étant choisie parmi les matières fécales non-fermentées, le lisier animal non-fermenté, les fibres végétales ou leurs mélanges, de préférence les fientes séchées de poules, l'herbe, la paille, les copeaux de bois ou leurs mélanges.

4. Gaine protectrice pour plants selon l'une des revendications 1 à 3, le matériau de base étant en outre enrichi en engrais minéraux, agents phytosanitaires écologiques ou en leurs mélanges.

5. Gaine protectrice pour plants selon l'une des revendications 1 à 4, le matériau dont ladite paroi est constituée contenant, outre le matériau de base, un liant biodégradable, de préférence de l'amidon, de la cellulose, de la pectine, de la colle de caséine, de la colle de dextrine, des résines ou cires naturelles et/ou de matières thermoplastiques réalisées à partir de matières premières renouvelables telles que les mélanges de lignine et de fibres de lin, de chanvre ou d'autres origines ou bien les polymères à base de caséine.

6. Gaine protectrice pour plants selon l'une des revendications 1 à 5, l'épaisseur de ladite paroi étant comprise entre 1 et 15 mm, de préférence entre 1,5 et 7 mm.

7. Gaine protectrice pour plants selon l'une des revendications 1 à 6, le matériau de base étant pressé, moulé par injection ou extrudé.

8. Procédé de fabrication d'une gaine protectrice pour plants, de la biomasse fermentée étant façonnée, en tant que constituant d'un matériau de base, sous une forme plane ou bien sous forme d'un cylindre creux, d'un prisme creux à trois ou à plusieurs faces ou d'un cône tronqué, ledit matériau de base étant en outre enrichi, avant son façonnage, en biomasse non-fermentée, et une couche de support intérieure et/ou extérieure étant appliquée sur ladite paroi, ladite couche de support étant constituée d'un treillis, tricot ou tissu biodégradable qui est réalisé à partir d'un matériau à fibres longues, préférentiellement à partir de fils, de chanvre, de paille ou de leurs mélanges.

9. Procédé selon la revendication 8, la biomasse non-fermentée étant choisie parmi les matières fécales non-fermentées, le lisier animal non-fermenté, les fibres végétales ou leurs mélanges, de préférence les fientes séchées de poules, l'herbe, la paille, les copeaux de bois ou leurs mélanges.

10. Procédé selon l'une des revendications 8 et 9, le matériau de base étant en outre enrichi, avant son façonnage, en engrais minéraux, agents phytosanitaires écologiques ou en leurs mélanges.

11. Procédé selon l'une des revendications 8 à 10, le matériau dont ladite paroi est constituée contenant, outre le matériau de base, un liant biodégradable, de préférence de l'amidon, de la cellulose, de la pectine, de la colle de caséine, de la colle de dextrine, des résines ou cires naturelles et/ou de matières thermoplastiques réalisées à partir de matières premières renouvelables telles que les mélanges de lignine et de fibres de lin, de chanvre ou d'autres origines ou bien les polymères à base de caséine.

12. Procédé selon l'une des revendications 8 à 11, l'épaisseur de ladite paroi étant comprise entre 1 et 15 mm, de préférence entre 1,5 et 7 mm.

13. Procédé selon l'une des revendications 8 à 12, le matériau de base étant pressé, moulé par injection ou extrudé pour le façonnage.
